# DEMANDE DE BREVET EUROPEEN

(11) **EP 1 536 607 A1**
(43) Date de publication de la demande: **01.06.2005**
(21) Numéro de dépôt: 03292988.7
(22) Date de dépôt: 27.11.2003
(51) Int. Cl.: H04L 29/06, H04L 12/18, H04L 12/58

(54) **Système et procédé de partage et d'adaptation de données entre un terminal WAP et des terminaux non compatibles**

(71) Demandeur: FRANCE TELECOM, 75015 Paris (FR)
(72) Inventeur: Vergouwen, Thomas, 92240 Malakoff (FR); Guisnet, Bertrand, 92130 Issy Les Moulineaux (FR)
(74) Mandataire: Bonnier, Patrick

(57) **Abrégé**

Système d'adaptation à au moins un deuxième terminal (10') d'un partage de données avec au moins un premier terminal WAP (10), visualisant au moins une donnée située dans au moins un réseau de communication.

Selon l'invention, ledit système est remarquable en ce qu'il comprend au moins un serveur (11) de partage de données apte à adapter au moins un message en fonction d'au moins un processus logique hébergé par ledit deuxième terminal (10') non compatible avec ledit partage de données.

Application au partage de données entre différents terminaux distants.

## Description

La présente invention concerne un système et un procédé d'adaptation à au moins un deuxième terminal non compatible avec un partage de données prévu pour au moins un premier terminal WAP (Wireless Application Protocol).

L'invention s'applique plus particulièrement au partage à distance entre au moins un premier terminal WAP, visualisant au moins une donnée, et au moins un deuxième terminal non compatible avec ledit partage de données.

Un terminal dit "WAP" est un terminal équipé d'un navigateur WAP, compatible avec le protocole d'application sans fil, appelé WAP (Wireless Application Protocol, soit protocole d'application sans fil). Ledit protocole WAP est normalisé par l'organisme de normalisation du WAP, soit l'OMA (Open mobile Alliance).

Un serveur de diffusion de données d'un réseau de communication, par exemple le réseau Internet ou bien un réseau privé de communication d'entreprise, fournit des données vers un terminal WAP lorsque celui-ci établit une connexion vers ledit serveur de diffusion de données.

Actuellement, l'évolution du travail coopératif en équipes, réparties par exemple sur plusieurs sites géographiques, rend nécessaire le partage de données. Le partage de données permet à plusieurs personnes de collaborer ensemble. Les données à partager peuvent être de nature très diverse, par exemple une page vierge ou avec du texte, un document intégrant une image, une photo ou un plan, un site web sur le réseau Internet, un fichier vidéo ou audio, etc...

Les systèmes existants de transmission de données permettent une transmission multipoint en temps réel sous forme de conférence multimédia, soit vocale, soit visuelle, soit écrite, etc... Pour accéder ou bien échanger lesdites données de toute nature, les terminaux doivent être équipés d'une application spécifique aux dites données, ce qui requière une capacité de traitement et une capacité mémoire importantes sur lesdits terminaux. La bande passante nécessaire pour accéder ou échanger lesdites données est également importante.

Par conséquent, lesdits systèmes sont réservés pour des terminaux à grande capacité mémoire et de traitement, terminaux de type ordinateur personnel ou PC (Personal Computer) ou bien de type assistant personnel numérique ou PDA (Personal Digital Assistant), raccordés sur des réseaux de télécommunications à large bande passante tels que les réseaux de télécommunications fixes.

De plus, dans le document EP 02 291 486 est présenté le cas du partage à distance de données, adapté aux réseaux cellulaires de communications avec les mobiles, ainsi qu'à des terminaux sans grande capacité mémoire, notamment les terminaux WAP.

Un serveur de partage de données sert d'intermédiaire entre un premier terminal WAP, qui souhaite partager une donnée, et au moins un deuxième terminal WAP. Ledit serveur de partage de données réalise la gestion du partage à distance de données entre lesdits premier et deuxième terminaux WAP. Le serveur de partage de données reçoit les requêtes en provenance des terminaux WAP, les analyse et les renvoie vers un serveur de diffusion de données après identification desdits terminaux WAP. Le serveur de partage de données dialogue avec un serveur de diffusion automatique en mode "push" pour commander la diffusion desdites données.

Le serveur de partage de données reçoit la donnée en provenance dudit serveur de diffusion de données, réalise autant de copies de ladite donnée que de deuxièmes terminaux WAP distants et transmet ladite donnée vers lesdits premier et deuxième terminaux WAP pour une consultation simultanée. Le document EP 02 291 486 présente la visualisation d'une donnée en mode partagé uniquement sur des terminaux WAP.

Aussi, le problème technique à résoudre par l'objet de la présente invention est de proposer un système et un procédé d'adaptation à au moins un deuxième terminal d'un partage de données avec au moins un premier terminal WAP, visualisant au moins une donnée située dans au moins un réseau de communication, qui permettrait de remédier aux inconvénients des systèmes existants en adaptant le partage de données à un terminal non compatible avec ledit partage de données.

La solution au problème technique posé consiste, selon la présente invention, en ce que ledit système comprend au moins un serveur de partage de données apte à adapter au moins un message en fonction d'au moins un processus logique hébergé par ledit deuxième terminal non compatible avec ledit partage de données.

L'invention a également pour objet un procédé d'adaptation à au moins un deuxième terminal d'un partage de données avec au moins un premier terminal WAP, visualisant au moins une donnée située dans au moins un réseau de communication, remarquable en ce que ledit procédé comporte les étapes consistant à : - analyser, par au moins un serveur de partage de données, au moins un paramètre représentant au moins une caractéristique technique dudit deuxième terminal non compatible avec ledit partage de données ; - recevoir au moins une requête en provenance dudit deuxième terminal par ledit serveur de partage de données ; - adapter, par ledit serveur de partage de données, au moins un message en fonction d'au moins un processus logique hébergé par ledit deuxième terminal ; - transmettre, par ledit serveur de partage de données, ledit message adapté vers ledit deuxième terminal ; - transmettre par ledit serveur de partage de données ladite donnée à partager vers lesdits premier et deuxième terminaux.

Le serveur de partage de données sert d'intermédiaire entre lesdits premier et deuxième terminaux et réalise la gestion d'un partage de données. Il met en mémoire toutes les informations relatives au partage de ladite donnée.

Lorsque l'utilisateur dudit premier terminal WAP actionne une demande de partage d'une donnée avec au moins un deuxième terminal, ledit serveur de partage de données reçoit et analyse les requêtes en provenance des participants audit partage de données.

Le deuxième terminal peut ne pas être compatible avec le partage de données prévu pour des terminaux push WAP. Ledit premier terminal WAP, qui initialise le partage de données, peut également ne pas être compatible avec la transmission de message en mode "push".

Dans ce cas, ledit serveur de partage de données adapte les messages transmis vers celui-ci en fonction d'un processus logique en place sur ledit premier ou deuxième terminal.

Selon l'invention, une demande de partage de données en provenance dudit premier terminal WAP comprend au moins un paramètre représentant au moins une caractéristique technique desdits premier et deuxième terminaux.

Selon l'invention, le serveur de partage de données reçoit et met en mémoire au moins une caractéristique technique desdits premier et deuxième terminaux.

Le serveur de partage de données met en mémoire tous les paramètres concernant ledit partage de données, dont au moins une caractéristique technique desdits premier et deuxième terminaux, par exemple la version du navigateur WAP existant sur ledit terminal. Par conséquent, il adapte les messages transmis en fonction des caractéristiques techniques desdits premier et deuxième terminaux.

Sans la gestion par le serveur de partage de données, ladite donnée à partager ne serait seulement adaptée qu'audit premier terminal WAP, qui initialise le partage de données.

Conformément à l'invention, le processus logique est exécuté automatiquement dès la commande de ladite demande de partage de données avec ledit deuxième terminal.

Conformément à l'invention, le processus logique est exécuté dès la mise sous tension dudit deuxième terminal.

Conformément à l'invention, l'exécution dudit processus logique est indiquée par au moins un moyen d'affichage dudit deuxième terminal.

Selon les caractéristiques techniques dudit deuxième terminal, celui-ci héberge un processus logique qui permet le partage de données. Ledit processus logique est une tâche de fond réalisée en continue sur ledit deuxième terminal.

Du fait du partage de données, ladite donnée est visualisée par des utilisateurs différents et sur des terminaux différents avec des capacités différentes. L'adaptation de la transmission de la donnée à partager est réalisée "terminal par terminal" grâce audit serveur de partage de données qui gère de façon centralisée tous les participants au partage de données.

Par conséquent, l'invention permet l'adaptation du système de partage de données et permet la transmission de ladite donnée quels que soient les différents terminaux participants au partage de données, de différente nature, indifféremment fixes ou mobiles.

La description qui va suivre en regard des dessins annexés, donnés à titre d'exemple non limitatif, fera bien comprendre en quoi consiste l'invention, comment elle peut être réalisée et d'autres caractéristiques de l'invention en ressortiront.

La figure 1 est une représentation d'un procédé d'adaptation à au moins un deuxième terminal non compatible avec un partage de données, selon un premier mode de réalisation, conforme à l'invention.

La figure 2 est une représentation d'un procédé d'adaptation à au moins un deuxième terminal non compatible avec un partage de données, selon un deuxième mode de réalisation, conforme à l'invention.

L'utilisateur d'un premier terminal WAP 10 est déjà en communication à distance avec l'utilisateur d'un deuxième terminal 10'. L'utilisateur du premier terminal WAP 10 peut également être en communication à distance avec plusieurs interlocuteurs, en plus dudit deuxième terminal 10'.

L'objet de l'invention s'applique à tout type de terminal 10 équipé d'un navigateur WAP, compatible avec le protocole d'application sans fil, appelé WAP (Wireless Application Protocol, soit protocole d'application sans fil), que ledit terminal 10 soit un terminal fixe ou mobile.

Quelque soit la nature du terminal et ses caractéristiques techniques, le deuxième terminal 10' n'est pas compatible avec le partage de données, prévu entre des terminaux de type WAP et mettant en oeuvre au moins une fonction de diffusion ou de réception automatique en mode "push".

Ladite communication entre les différents interlocuteurs distants peut être une communication vocale ou bien une vidéocommunication, établie par l'intermédiaire d'un réseau filaire de télécommunications fixes ou bien par l'intermédiaire d'un réseau cellulaire de télécommunications pour les mobiles.

Ladite communication entre les différents interlocuteurs distants peut également être une communication écrite, de manière à permettre un échange en temps réel ou en quasi-temps réel. Ladite communication écrite est, par exemple, une communication par une messagerie électronique ou bien par une messagerie instantanée de type "chat" ou "instant messaging".

En plus de ladite communication déjà établie, l'utilisateur dudit premier terminal WAP 10 souhaite partager une donnée avec au moins un deuxième terminal 10'. Ce partage de données est mis en oeuvre tel que décrit dans le document EP 02 291 486.

Pour ce faire, l'utilisateur dudit premier terminal WAP 10 ouvre un navigateur WAP, qui lui permet d'interroger au moins un serveur 12 de diffusion de données pour recevoir une donnée, que ledit utilisateur souhaite visualiser en mode partagé.

Ledit serveur 12 de diffusion de données est situé dans tout type de réseau de communication, par exemple le réseau Internet ou bien un réseau intranet privé de communication d'entreprise, qui comprend au moins un serveur 12 de diffusion de données. La connexion entre ledit premier terminal WAP 10 et le serveur 12 de diffusion de données est établie par l'intermédiaire dudit réseau de télécommunications, indifféremment fixe ou cellulaire, auquel est raccordé ledit premier terminal WAP 10.

L'utilisateur dudit premier terminal WAP 10 actionne une demande de partage de données. La donnée à partager peut être de toute nature, par exemple une page au format WML (Wireless Markup Language, soit langage à balisage pour sans fil), un contenu au format XML (eXtensible Markup Language, soit langage à balisage évolué), une image au format Flash ou bien tout autre format de données.

La demande de partage de données, en provenance dudit premier terminal WAP 10, est transmise à au moins un serveur 11 de partage de données, qui stocke ladite demande de partage de données (étape 1).

Pour ce faire, ledit premier terminal WAP 10 envoie vers ledit serveur 11 de partage de données une requête, correspondant à ladite demande de partage, qui comprend au moins un paramètre concernant le premier terminal WAP 10 et le partage de données. Ladite requête peut également comprendre au moins un paramètre représentant au moins une caractéristique technique dudit deuxième terminal 10'.

L'un des paramètres comprend au moins une référence de ladite donnée à partager, ainsi que l'identifiant dudit premier terminal WAP 10 (par exemple, son numéro MSISDN, soit "Mobile Subscriber Integrated Service Digital Number") et au moins une caractéristique technique dudit premier terminal WAP 10 et vers quel deuxième terminal 10' se fait le partage de données. Ladite donnée peut également être partagée avec plusieurs deuxièmes terminaux 10' comme indiqué dans le document EP 02 291 486.

Les équipements du réseau de télécommunications indifféremment fixe ou cellulaire, sur lequel sont raccordés lesdits premier et deuxième terminaux 10, 10', peuvent également transférer les identifiants et les caractéristiques techniques des différents interlocuteurs distants vers le serveur 11 de partage de données.

Lesdits premier et deuxième terminaux 10, 10' peuvent également être raccordés à des réseaux de télécommunications différents, soit gérés par des opérateurs différents, soit l'un des terminaux raccordé sur un réseau fixe de télécommunications et l'autre sur un réseau mobile de télécommunications.

Ledit serveur 11 de partage de données reçoit et met en mémoire au moins une caractéristique technique desdits premier et deuxième terminaux 10, 10'.

Tous lesdits paramètres concernant le partage de données sont mis en mémoire dans une base de données dudit serveur 11 de partage de données. Ladite base de données peut être physiquement incluse ou non dans ledit serveur 11 de partage de données.

A la réception de ladite demande de partage de données, le serveur 11 de partage de données, incluant un dispositif comprenant au moins un moyen pour analyser au moins un paramètre, analyse les différents paramètres transmis ainsi que la requête en provenance dudit premier terminal WAP 10.

Ledit paramètre, représentant l'identification dudit deuxième terminal 10', permet au serveur 11 de partage de données de connaître les caractéristiques techniques du deuxième terminal 10'. De même pour le premier terminal WAP 10 et tous les deuxièmes terminaux 10' participants au partage de données.

Le serveur 11 de partage de données a stocké la liste des terminaux participants au partage de données. Lorsque ces terminaux correspondent à des abonnés gérés par lui, le serveur 11 de partage de données peut avoir stocké les caractéristiques techniques desdits terminaux.

Les caractéristiques techniques des terminaux participants au partage de données peuvent également être transmises lors de l'échange des requêtes avec ledit serveur 11 de partage de données. Sinon, ledit serveur 11 de partage de données peut interroger au moins un serveur de capacités de terminaux dans le réseau de télécommunications pour connaître lesdites caractéristiques techniques.

Les caractéristiques techniques desdits premier et deuxième terminaux 10, 10' peuvent, notamment, indiquer le nom et la version du navigateur WAP installé sur ledit terminal, paramètre appelé "User Agent", ou bien si ledit terminal 10, 10' met en oeuvre ou non au moins une fonction de diffusion automatique en mode "push".

Lesdits deuxièmes terminaux 10', qui possèdent un navigateur WAP et qui mettent en oeuvre une fonction de diffusion automatique en mode "push", participent au partage de données tel que décrit dans le document mentionné précédemment, soit EP 02 291 486.

Parmi lesdits deuxièmes terminaux 10', certains peuvent être des terminaux WAP qui ne mettent pas en oeuvre une fonction de diffusion automatique en mode "push". D'autres deuxièmes terminaux 10' peuvent être des terminaux non WAP. Lesdits terminaux sont non compatibles avec ledit partage de données prévu pour un terminal push WAP.

Ledit premier terminal WAP, qui a initialisé le partage de données, peut être un terminal WAP non compatible avec la transmission de message en mode "push".

Pour participer au partage de données, lesdits premier et deuxième terminaux WAP non push ou bien lesdits deuxièmes terminaux non WAP hébergent au moins un processus logique apte à dialoguer avec ledit serveur 11 de partage de données qui gère ledit partage de données. Ledit processus logique permet la compatibilité desdits premier et deuxième terminaux 10, 10' avec ledit partage de données. Le serveur 11 de partage de données est apte à adapter au moins un message en fonction dudit processus logique hébergé par ledit deuxième terminal 10' non compatible avec ledit partage de données.

Ledit processus logique est exécuté automatiquement dès la commande de ladite demande de partage de données ou bien dès la mise sous tension du deuxième terminal 10' ou bien dès que le premier terminal WAP 10 est entré en communication à distance avec ledit deuxième terminal 10' et souhaite partager une donnée. Dès lors, ledit processus logique est exécuté en continue sur ledit deuxième terminal 10' comme une tâche de fond. L'exécution dudit processus logique peut, par exemple, être indiquée par au moins un moyen d'affichage ou de visualisation, tel un écran, dudit deuxième terminal 10'.

Différents processus logiques peuvent être hébergés selon les caractéristiques techniques du deuxième terminal 10'. Lorsque le premier terminal WAP 10 commande une demande de partage de données, le serveur 11 de partage de données est sollicité. Pour ledit deuxième terminal 10' non compatible avec ledit partage de données, il ne transmet pas une demande de chargement automatique de données vers un serveur WAP de diffusion automatique en mode "push", tel que décrit dans le document EP 02 291 486.

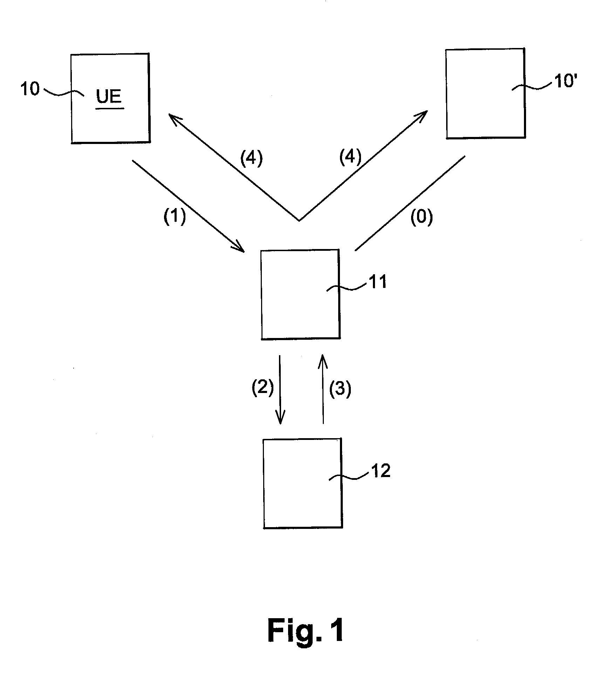

Dans un premier mode de réalisation, représenté en figure 1, ledit processus logique émet en continue une requête à partir dudit deuxième terminal 10' vers ledit serveur 11 de partage de données pour le chargement d'une donnée à partager (étape 0). Ladite requête en continue représente une demande pour savoir si ledit premier terminal WAP 10 a émis une demande de partage de données (demande initiale de partage ou bien changement de la donnée à partager) et, si oui, le chargement de ladite donnée à partager.

Ce premier mode de réalisation est particulièrement adapté lorsque le deuxième terminal 10', non compatible avec ledit partage de données, est raccordé à un réseau fixe de télécommunications. L'émission d'une requête en continue est moins adaptée à un réseau mobile de télécommunications, du fait du trafic important généré par ce mode de réalisation.

Le serveur 11 de partage de données sollicite au moins un serveur 12 de diffusion de données pour recevoir la donnée à partager (étape 2). Ledit serveur 12 de diffusion de données transmet alors ladite donnée à partager vers le serveur 11 de partage de données (étape 3).

Ayant reçu une requête desdits premier et deuxième terminaux participants au partage de données, requête émise en continue par ledit deuxième terminal 10', le serveur 11 de partage de données transmet un message avec ladite donnée à partager vers ledit premier terminal WAP 10 et lesdits deuxièmes terminaux 10' (étape 4). Ledit serveur 11 de partage de données transmet de la même façon toute nouvelle donnée à partager.

Le serveur 11 de partage de données peut également transmettre un message indiquant une modification de la donnée à partager. Dans ce cas, ledit deuxième terminal 10' émet une nouvelle requête vers ledit serveur 11 de partage de données pour recevoir ladite donnée à partager qui a été modifiée, par exemple une page nouvelle à visualiser. Ledit serveur 11 de partage de données transmet alors ladite donnée à partager.

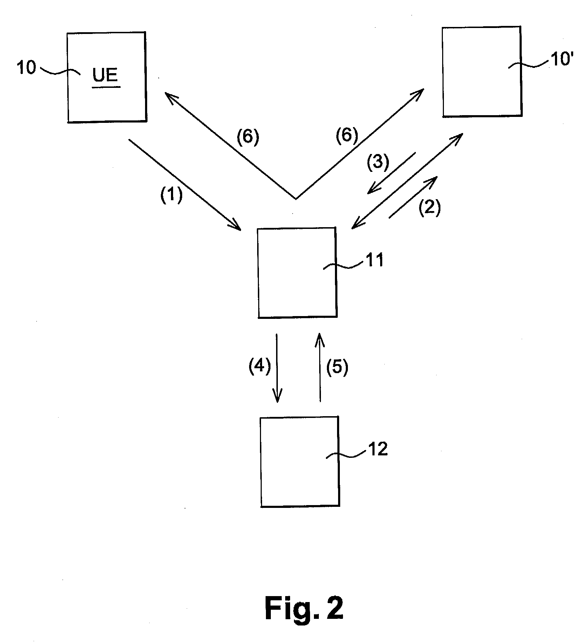

Dans un deuxième mode de réalisation, représenté en figure 2, le serveur 11 de partage de données transmet un message de demande de partage de données vers ledit deuxième terminal 10' sur au moins un canal de communication spécifique pour ledit partage de données, existant entre le serveur 11 de partage de données et le deuxième terminal 10' (étape 2).

A la réception dudit message transmis, ledit processus logique émet une requête à partir dudit deuxième terminal 10' vers le serveur 11 de partage de données pour recevoir ladite donnée à partager (étape 3).

De la même façon que pour le premier mode de réalisation, le serveur 11 de partage de données sollicite au moins un serveur 12 de diffusion de données pour recevoir la donnée à partager (étape 4). Ledit serveur 12 de diffusion de données transmet ladite donnée à partager vers le serveur 11 de partage de données (étape 5). Le serveur 11 de partage de données transmet alors ladite donnée à partager vers ledit premier terminal WAP 10 et vers lesdits deuxièmes terminaux 10' (étape 6).

Ce deuxième mode de réalisation est particulièrement adapté lorsque le deuxième terminal 10', non compatible avec ledit partage de données, est raccordé à un réseau mobile de télécommunications.

Comme indiqué précédemment, le partage d'une donnée visualisée par ledit premier terminal WAP 10 est possible avec plusieurs deuxièmes terminaux 10'. Indifféremment, certains deuxièmes terminaux sont compatibles sans adaptation, ledit premier terminal WAP non push 10 ou d'autres deuxièmes terminaux 10' fonctionnent selon le premier ou bien selon le deuxième mode de réalisation conforme à l'invention. L'adaptation de la transmission de la donnée à partager est réalisée "terminal par terminal" grâce audit serveur 11 de partage de données qui gère de façon centralisée tous les participants au partage de données de façon centralisée.

Dans les deux modes de réalisation, le serveur 11 de partage de données inclut un dispositif comprenant au moins un moyen pour recevoir au moins une requête en provenance dudit deuxième terminal 10'. Ledit serveur 11 de partage de données inclut également un moyen pour adapter et transmettre au moins un message en fonction dudit processus logique hébergé par ledit terminal 10, 10' non compatible avec ledit partage de données.

Comme le serveur 11 de partage de données a stocké au moins une caractéristique technique dudit premier ou deuxième terminal 10, 10', en fonction de celle-ci, ledit serveur 11 de partage de données s'adapte au processus logique en place dans ledit terminal. S'il reçoit une requête en continue, il transmet un message avec ladite donnée à partager vers ledit terminal 10, 10'. S'il existe au moins un canal de communication spécifique pour un partage de données, il transmet un message de demande de partage de données vers ledit terminal 10, 10'. Ledit serveur 11 de partage de données transmet un message adapté audit processus logique vers ledit premier ou deuxième terminal 10, 10'.

Ledit premier ou deuxième terminal 10, 10', non compatible avec ledit partage de données, héberge un processus logique apte à dialoguer avec ledit serveur 11 de partage de données qui gère le partage de données. Ledit premier ou deuxième terminal 10, 10' comprend au moins un programme d'ordinateur, appelé "processus logique", qui émet au moins une requête vers ledit serveur 11 de partage de données, reçoit dudit serveur 11 de partage de données au moins un message adapté en fonction des caractéristiques techniques dudit premier ou deuxième terminal 10, 10' et reçoit ladite donnée à partager avec ledit premier terminal WAP 10.

## Revendications

1. Système d'adaptation à au moins un deuxième terminal (10') d'un partage de données avec au moins un premier terminal WAP (10), visualisant au moins une donnée située dans au moins un réseau de communication, caractérisé en ce ledit système comprend au moins un serveur (11) de partage de données apte à adapter au moins un message en fonction d'au moins un processus logique hébergé par ledit deuxième terminal (10') non compatible avec ledit partage de données.

2. Système d'adaptation à au moins un deuxième terminal (10') selon la revendication 1, **caractérisé en ce qu'**au moins une demande de partage de données en provenance dudit premier terminal WAP (10) comprend au moins un paramètre représentant au moins une caractéristique technique desdits premier et deuxième terminaux (10, 10').

3. Système d'adaptation à au moins un deuxième terminal (10') selon la revendication 1, **caractérisé en ce que** ledit serveur (11) de partage de données reçoit et met en mémoire au moins une caractéristique technique desdits premier et deuxième terminaux (10, 10').

4. Système d'adaptation à au moins un deuxième terminal (10') selon l'une quelconque des revendications 1 à 3, **caractérisé en ce que** ledit processus logique est exécuté automatiquement dès la commande de ladite demande de partage de données avec ledit deuxième terminal (10').

5. Système d'adaptation à au moins un deuxième terminal (10') selon l'une quelconque des revendications 1 à 3, **caractérisé en ce que** ledit processus logique est exécuté dès la mise sous tension dudit deuxième terminal (10').

6. Système d'adaptation à au moins un deuxième terminal (10') selon l'une quelconque des revendications 1 à 5, **caractérisé en ce que** l'exécution dudit processus logique est indiquée par au moins un moyen d'affichage dudit deuxième terminal (10').

7. Système d'adaptation à au moins un deuxième terminal (10') selon l'une quelconque des revendications 1 à 6, **caractérisé en ce que** ledit processus logique émet en continue une requête vers ledit serveur (11) de partage de données pour le chargement d'au moins une donnée à partager.

8. Système d'adaptation à au moins un deuxième terminal (10') selon la revendication 7, **caractérisé en ce que** ledit serveur (11) de partage de données transmet au moins un message avec ladite donnée à partager vers ledit deuxième terminal (10').

9. Système d'adaptation à au moins un deuxième terminal (10') selon la revendication 7, **caractérisé en ce que** ledit serveur (11) de partage de données transmet au moins un message indiquant une modification de ladite donnée à partager vers ledit deuxième terminal (10').

10. Système d'adaptation à au moins un deuxième terminal (10') selon la revendication 9, **caractérisé en ce que** ledit deuxième terminal (10') émet au moins une requête vers ledit serveur (11) de partage de données pour recevoir ladite donnée à partager.

11. Système d'adaptation à au moins un deuxième terminal (10') selon l'une quelconque des revendications 1 à 6, **caractérisé en ce que** ledit serveur (11) de partage de données transmet au moins un message de demande de partage de données vers ledit deuxième terminal (10') sur au moins un canal de communication spécifique pour ledit partage de données.

12. Système d'adaptation à au moins un deuxième terminal (10') selon la revendication 11, **caractérisé en ce que** ledit processus logique émet au moins une requête vers ledit serveur (11) de partage de données pour recevoir ladite donnée à partager.

13. Système d'adaptation à au moins un deuxième terminal (10') selon l'une quelconque des revendications 1 à 12, **caractérisé en ce que** lesdits premier et deuxième terminaux (10, 10') sont indifféremment connectés en fixe ou en mobile à un réseau fixe ou à un réseau cellulaire de télécommunications.

14. Dispositif associable à un système d'adaptation à au moins un deuxième terminal (10') selon l'une quelconque des revendications 1 à 13, **caractérisé en ce qu'**il comprend au moins un moyen pour analyser au moins un paramètre en provenance dudit premier terminal WAP (10), un moyen pour recevoir au moins une requête en provenance dudit deuxième terminal (10') et un moyen pour adapter et transmettre au moins un message en fonction d'au moins un processus logique hébergé par ledit deuxième terminal (10') non compatible avec ledit partage de données.

15. Serveur (11) de partage de données associable à un système d'adaptation à au moins un deuxième terminal (10') selon l'une quelconque des revendications 1 à 14, **caractérisé en ce qu'**il comprend au moins ledit dispositif conforme à la revendication 14.

16. Procédé d'adaptation à au moins un deuxième terminal (10') d'un partage de données avec au moins un premier terminal WAP (10), visualisant au moins une donnée située dans au moins un réseau de communication, **caractérisé en ce que** ledit procédé comporte les étapes consistant à :
- analyser, par au moins un serveur (11) de partage de données, au moins un paramètre représentant au moins une caractéristique technique dudit deuxième terminal (10') non compatible avec ledit partage de données,
- recevoir au moins une requête en provenance dudit deuxième terminal (10') par ledit serveur (11) de partage de données,
- adapter, par ledit serveur (11) de partage de données, au moins un message en fonction d'au moins un processus logique hébergé par ledit deuxième terminal (10'),
- transmettre, par ledit serveur (11) de partage de données, ledit message adapté vers ledit deuxième terminal (10'),
- transmettre par ledit serveur (11) de partage de données ladite donnée à partager vers lesdits premier et deuxième terminaux (10, 10').

17. Programme d'ordinateur **caractérisé en ce qu'**il comprend des lignes d'instructions pour exécuter les étapes suivantes lors d'une demande de diffusion de données :
- émettre au moins une requête vers au moins un serveur (11) de partage de données,
- recevoir dudit serveur (11) de partage de données au moins un message adapté en fonction d'au moins une caractéristique technique dudit deuxième terminal (10'),
- recevoir dudit serveur (11) de partage de données au moins une donnée à partager avec lesdits premier et deuxième terminaux (10, 10').

18. Terminal (10') associable à un système d'adaptation à au moins un deuxième terminal (10') selon l'une quelconque des revendications 1 à 17, **caractérisé en ce qu'**il comprend au moins ledit programme d'ordinateur conforme à la revendication 18.
